# NEUE EUROPÄISCHE PATENTSCHRIFT

(11) **EP 0 521 307 B2**
(45) Veröffentlichungstag und Bekanntmachung des Hinweises auf die Entscheidung über den Einspruch: **06.03.2002**
(45) Hinweis auf die Patenterteilung: 27.12.1995
(21) Anmeldenummer: 92109422.3
(22) Anmeldetag: 04.06.1992
(51) Int. Cl.: B60J 7/12, B60J 7/20

(54) **Faltverdeck für einen Personenkraftwagen mit aufklappbarem Dach**
Folding hood for motorvehicle provided with a collapsible roof
Capote pliante pour voiture automobile avec toit repliable

(30) Priorität: 04.07.1991 DE 9108242 U; 20.05.1992 DE 9206807 U
(43) Veröffentlichungstag der Anmeldung: 07.01.1993
(73) Patentinhaber: Wilhelm Karmann GmbH, D-49084 Osnabrück (DE)
(72) Erfinder: Licher, Siegfried, W-4504 Georgsmarienhütte (DE); Richter, Wolfgang, W-4512 Wallenhorst (DE)
(74) Vertreter: Busse & Busse Patentanwälte

(56) Entgegenhaltungen:
- DE-A- 3 328 294
- DE-A- 3 416 286
- US-A- 2 798 763
- US-A- 4 573 732

## Beschreibung

Die Erfindung bezieht sich auf ein Faltverdeck für einen Personenkraftwagen mit aufklappbarem Dach (Cabriolet) nach dem Oberbegriff des Anspruchs 1.

Gemäß DE-A-34 16 286 ist ein Cabriolet-Fahrzeug mit einem Klappverdeck bekannt, das aus zwei oder mehreren unter dem Verdeckstoff befindlichen starren Dachteilen besteht, die untereinander über quer zur Fahrzeuglängsachse verlaufende Überbrückungsteile verbunden sind. Diese Dachteile sind insgesamt mit einem Verdeckstoff überspannt, der zwischen die zusammengeklappten starren Dachteile in einer exakten Zwangsfaltung einlegbar ist, nachdem die starren Dachteile über einem ebenfalls als starres Teil ausgebildeten Verdeckheck zusammengeklappt sind. Derartige, mit starren Dachteilen versehene Klapp-Verdecke bilden gattungsgemäß jeweils Wagen mit festem. Dach (sogenannte Hardtop-Cabriolets) oder Verdecke mit abnehmbaren Metalldächern.

Bei einem Cabriolet-Fahrzeug gemäß DE-A-33 28 294 ist zwischen den das Klappsystem bildenden Gestängeschenkeln eine vollständig aus flexiblem Verdeckmaterial bestehende Dachhaut vorgesehen, die in der zurückgeklappten Faltstellung gemeinsam mit dem Verdeckgestänge im Heckbereich des Personenkraftwagens ablegbar ist, wobei das offene Fahren ohne eine zusätzliche Schutzhülle bei einer möglichen Kollision eine Gefahrquelle- darstellt und außerdem ein ungeschütztes Faltverdeck schneller verschmutzt.

Der Erfindung liegt die Aufgabe zugrunde, ein Faltverdeck für ein Cabriolet-Fahrzeug zu schaffen, das ohne besonderen Aufwand geschützt abdeckbar ist, damit besonders auch die kurzzeitige Fahrzeugbenutzung mit abwechselnd aufgeklapptem bzw. geschlossenem Faltverdeck erleichtert und beim Fahren mit geschlossenem Faltverdeck eine gestraffte Dachkontur aufweist.

Die Erfindung löst diese Aufgabe durch ein Faltverdeck für einen Personenkraftwagen mit den Merkmalen des Anspruchs 1. Hinsichtlich wesentlicher weiterer Ausgestaltunasmerkmale wird bezüglich einer ersten Ausführungsform auf die Ansprüche 2 bis 13 und bezüglich einer weiteren Ausführungsform auf die Ansprüche 14 bis 19 verwiesen.

Das erfindungsgemäße Faltverdeck ist mit der zwischen den vorderen Gestängeschenkeln befindlichen in sich steifen und formstabilen Verdeckschale insbesondere auch für kurzzeitiges Fahren mit aufgeklappten Verdeck geeignet, da die Verdeckschale über dem aufgeklappten Faltverdeck eine Schutzabdeckung bildet, so daß keine zusätzliche Persenning oder sonstige Abdeckung über dem Faltverdeck mehr angebracht werden muß. In die in Schließstellung des Faltverdecks den vorderen Fahrzeugdachbereich bildende Verdeckschale kann vorteilhaft ein aufstellbares Sonnendach eingebaut sein, das zusätzlichen Komfort beim Fahren mit geschlossenem Faltverdeck ermöglicht. Das optische Erscheinungsbild des Faltverdecks mit der Verdeckschale in Schließstellung ist dadurch insgesamt verbessert, daß die mit der Verdeckschale verspannte flexible Dachhaut mit der Verdeckschale einen gleichmäßigen Übergang aus bildet und mittels besonderer Spanngurte auch beim Fahren eine gestraffte Kontur beibehält.

In einer Ausbildung des Klappgestänges mit zwei Gestängeschenkeln können diese jeweils über die Viergelenkkette einen Unterbau für das Faltverdeck derart bilden, daß dieses beim Klappvorgang in einer Steuerbahn geführt wird, die eine gleichmäßige Schwenkbewegung des Faltverdecks ermöglicht und so auf der flexiblen Dachhaut eine Verdeckspannung bewirkt ist, die auch im Knickbereich der jeweiligen Gestängeschenkel Überbelastungen sicher vermeidet.

Durch eine synchrone Ansteuerung der jeweiligen Viergelenkketten ist die Kinematik des Faltverdecks so ausgelegt, daß der an die Verdeckschale anschließende Bereich mit der flexiblen Dachhaut keine zusätzlichen Dehnungen im Verdeckstoff aufbaut und damit insgesamt eine oftmalige Wiederholung des Falt- und Schließvorganges ohne die Verschleißfestigkeit der Dachhaut beeinflussende Überbelastungsbereiche erreichbar ist.

Hinsichtlich wesentlicher weiterer Vorteile und Einzelheiten der Erfindung wird auf die nachfolgende Beschreibung und die Zeichnung verwiesen, in der zwei Ausführungsbeispiele des Gegenstandes der Erfindung schematisch näher veranschaulicht sind. In der Zeichnung zeigen:
- Fig. 1: eine teilweise geschnittene Draufsicht schräg von hinten auf ein erfindungsgemäßes Faltverdeck in Schließstellung in einer ersten Ausführungsform,
- Fig. 2: eine Prinzipdarstellung von vier Gestängeschenkeln des Faltverdecks in einer Seitenansicht in Schließstellung ähnlich Fg. 1,
- Fig. 3: eine Prinzipdarstellung gemäß Fig. 2 mit den Gestängeschenkeln in Faltstellung,
- Fg. 4: eine Seitenansicht des Klappgestänges in Blickrichtung IV gemäß Fig. 1,
- Fig. 5: eine geschnittene Prinzipdarstellung einer Verdeckschale gemäß der Linie V-V in Fig. 1.
- Fig. 6: eine teilweise geschnittene Draufsicht auf das mit zwei Gestängeschenkeln versehene Faltverdeck in einer zweiten Ausführungsform,
- Fig. 7: eine Prinzipdarstellung des Faltverdecks gemäß Fig. 6 in einer Seitenansicht in einer ersten Öffnungsphase und
- Fig. 8: eine Prinzipdarstellung ähnlich Fig. 7 mit dem Faltverdeck in Faltstellung.

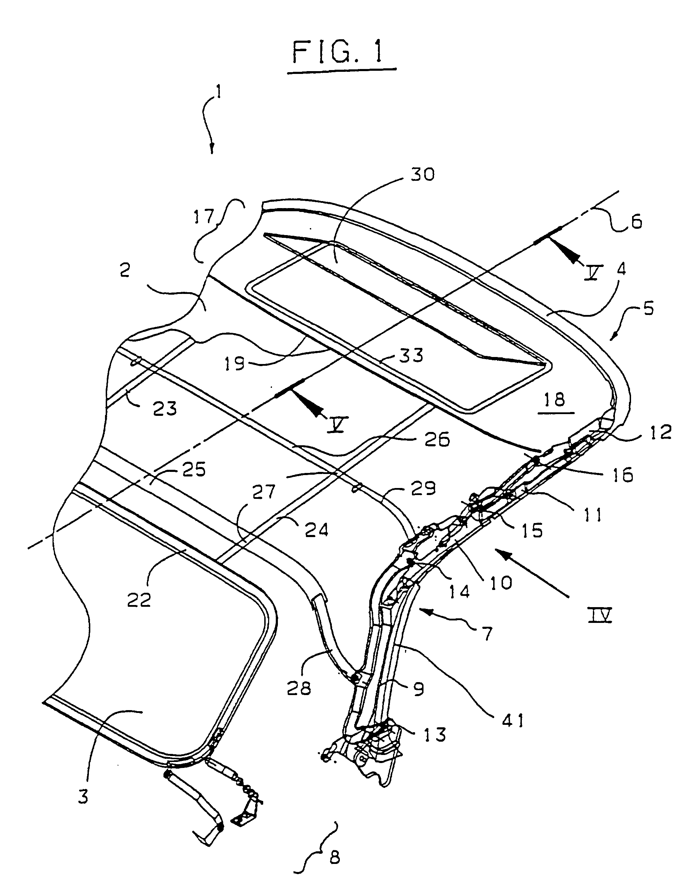

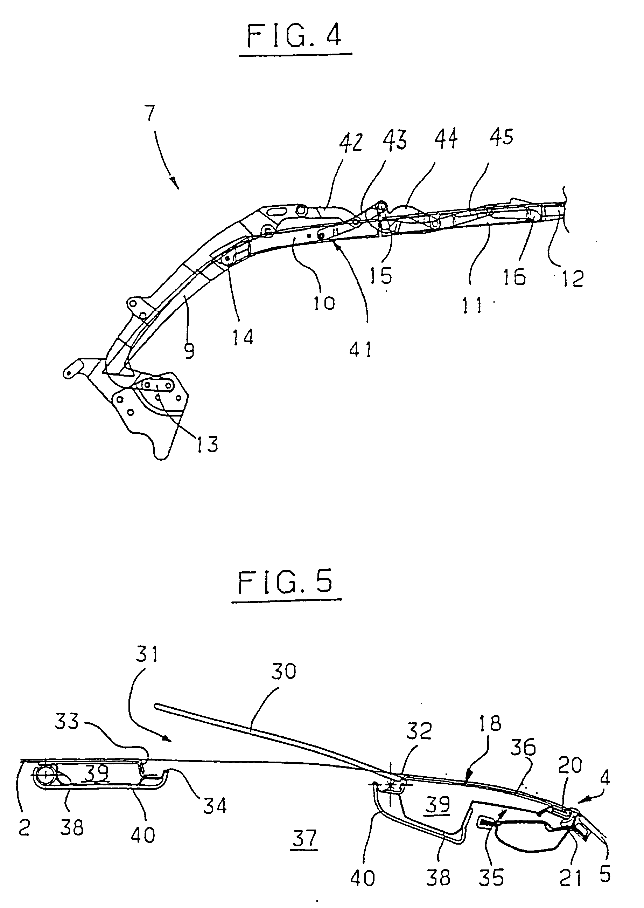

In Fig. 1 ist ein insgesamt mit 1 bezeichnetes Faltverdeck für einen Personenkraftwagen dargestellt, das eine flexible Dachhaut 2 aus z.B. mehrschichtigem Textilmaterial aufweist, die in Schließstellung zwischen einem eine Heckscheibe 3 umschließenden hinteren Bereich und einem vorderen Randbereich 4 oberhalb der Fahrzeug-Frontscheibe 5 verspannt ist (vgl. auch Fig. 5). Die flexible Dachhaut 2 ist dabei zwischen zwei jeweils symmetrisch zu einer Längsmittelebene 6 angeordneten randseitigen Klappgestängen 7 aufgenommen und mit diesen aus der dargestellten Schließstellung in eine im wesentlichen übereinanderliegende Faltstellung im Heckbereich 8 des Fahrzeuges verbringbar.

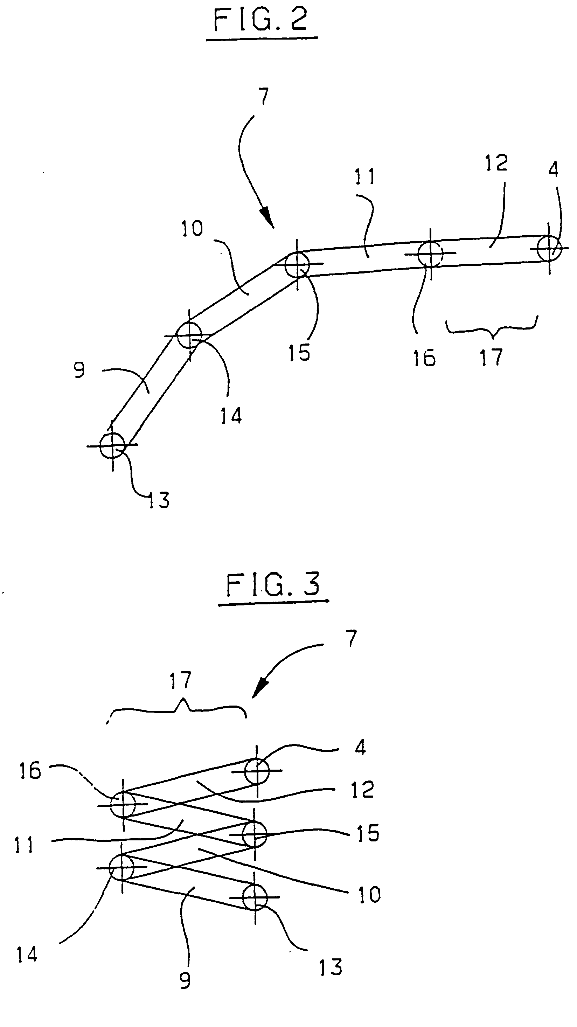

In Prinzipdarstellungen gemäß Fig. 2 und Fig. 3 ist die mit dem Klappgestänge 7 gebildete Verdeckkinematik näher veranschaulicht. In einer bevorzugten Ausbildung ist das Klappgestänge 7 dabei mit vier Gestängeschenkeln 9,10,11,12 und zugehörigen Gestängeschwenkachsen 13,14,15,16 versehen. Damit kann bei einer zur Längsmittelebene 6 (Fig. 1) parallelen Schwenkbewegung des Faltverdecks 1 dieses aus der gestreckten Schließstellung gemäß Fig. 1 und 2 in die Faltstellung gemäß Fig. 3 verbracht werden, wobei beim Öffnen des Faltverdeckes 1 ein vorderer Verdeckbereich 17 nur gering angehoben und zwangsgeführt in eine Schutzabdeckstellung oberhalb der Gestängeschenkel 9,10,11,12 überführt und mit geeigneten Arretierungsmitteln (nicht dargestellt) im Heckbereich 8 festgelegt wird (Fig. 3).

Der vordere Verdeckbereich 17 des Faltverdecks 1 ist erfindungsgemäß als eine im Ganzen in sich steife bzw. formstabile Verdeckschale 18 ausgebildet, die bündig mit der flexiblen Dachhaut 2 verspannt ist, indem auch eine vollständige Überdeckung der Verdeckschale 18 mit, dem Verdeckbezug der Dachhaut 2 vorgesehen ist. In der in Fig. 5 dargestellten Schließstellung greift eine vordere Randwulst 20 an der Verdeckschale 18 in eine Karosserieformausnehmung 21 im vorderen Randbereich 4 oberhalb der Frontscheibe 5 ein und bildet eine formstabile Anbindung des Faltverdecks 1 im Frontbereich, so daß insgesamt in Verbindung mit den nachstehend erörterten Spanngurten eine Ausbildung des Faltverdecks 1 geschaffen ist, die auch unter Belastung durch Fahrtwind eine gleichmäßige und gestraffte Kontur darbietet.

Von der rückseitigen Kante 19 der in sich steifen, formstabilen Verdeckschale 18 (Fig. 1) ausgehend sind zu einem Heckscheibenrahmen 22 gerichtete Spanngurte 23,24 unterhalb der flexiblen Dachhaut 2 parallel zur Längsmittelebene 6 angeordnet, so daß sowohl die Verdeckschale 18 als auch die Dachhaut 2 in der Schließstellung des Faltverdecks 1 miteinander verspannt sind, wobei die Verdeckschale 18 bei Belastung des Faltverdecks durch Fahrtwind die flexible Dachhaut 2 stabilisiert. Die Spanngurte 23,24 sind in Anpassung an die flexible Dachhaut 2 zweckmäßig aus einem textilen Material gebildet.

Die Formhaltigkeit der flexiblen Dachhaut 2 kann zum Heckbereich 8 des Fahrzeuges hin noch dadurch verbessert sein, daß zwischen den hinteren Gestängeschenkeln 9,10 jeweils ein quer verspannter Spriegel 25,26 die Dachhaut 2 zusätzlich untergreift, der in Überdeckungsbereichen 27 mit den Spanngurten 23,24 verbunden sein kann. Zur Anbindung der Spriegel 25,26 an die Gestängeschenkel 9,10 sind zweckmäßig Verbindungsstücke 28,29 vorgesehen.

Die in sich steife und formstabile Verdeckschale 18 ist in der dargestellten Ausführungsform gemäß Fig.1 zusätzlich mit einem integrierten, aufstellbaren Sonnendach 30 versehen, daß im mittleren Bereich der Verdeckschale 18 angeordnet ist. Mit dieser zweckmäßigen Ausgestaltung ist eine weitere Verbesserung des Komforts des Personenkraftwagens erreichbar, da das Sonnendach 30 in Schließstellung des Faltverdecks 1 eine Innenraumbelüftung ermöglicht.

Das in Fig. 5 näher veranschaulichte Sonnendach 30 ist zweckmäßig in einer abgesenkten Formausnehmung 31 der Verdeckschale 18 am zur Frontscheibe 5 vorderen Randbereich 32 schwenkbeweglich abgestützt und zum hinteren Randbereich 33 an einer Dichtkante 34 auflegbar. Die Verdeckschale 18 selbst kann vorteilhaft als ein zumindest bereichsweise doppellagiger Profilrahmen 35 mit einer oberen Deckhaut 36 und einer den Innenraum 37 des Fahrzeuges nach oben begrenzenden Schutzdecke 38 ausgebildet sein. Die innere Schutzdecke 38 kann dabei Formerweiterungen 39 aufweisen, an der jeweils eine Innenpolsterung 40 gehalten ist.

Die in sich steife, formstabile Verdeckschäle 18 ist - in Verbindung mit einer nicht näher dargestellten Ausbildung des Fahrzeug-Heckbereichs - als eine das Klappgestänge 7 und das Verdeckmaterial 2 in Faltstellung im hinteren Fahrzeugbereich 8 vollständig oder nahezu vollständig bedeckende Hüllform ausgebildet, mit der für das in Offenstellung gebrachte Faltverdeck 1 eine feste Schutzabdeckung erreichbar ist. Für das Fahren mit geöffnetem Faltverdeck 1 können damit die verkehrstechnischen Sicherheitsanforderungen mit geringem Aufwand erfüllt werden; das zusätzliche Anbringen einer Persenning oder sonstigen Abdekkung kann unterbleiben, da die Verdeckschale 18 hinreichenden Schutz bietet.

Das in Fig. 4 näher veranschaulichte Klappgestänge 7 mit den in einem zugeordneten Verdeckrahmen 41 geführten Gestängeschenkeln 9,10,11,12 weist Führungsstangen 42,43,44,45 für die Verdeckkinematik des Faltverdecks 1 auf, die das Faltverdeck 1 randseitig stabilisierend in der dargestellten Schließstellung festlegen sowie mit geringem Aufwand das Rückklappen in die geöffnete Faltstellung gemäß Fig. 3 ermöglichen.

Der Gegenstand der Erfindung ist nicht auf das in den Zeichnungsfiguren 1 bis 5 dargestellte und vorstehend beschriebene Ausführungsbeispiel beschränkt. So kann:z.B. in einer weiteren Ausgestaltung das Klappgestänge 7 mit dem zugehörigen Faltverdeck 1 mit Verdeckschale 18 dahingehend modifiziert sein, daß eine andere beliebige gerade Anzahl von Gestängeschenkeln 13,14,15,16 vorgesehen ist. Bereits mit lediglich zwei Gestängeschenkeln, die paarweise gegenüberliegend zwischen sich das Faltverdeck 1 aufnehmen und zwischen deren vorderen Gestängeschenkeln die Verdeckschale 18 angeordnet ist, kann eine in der Verdeckkinematik zum Erreichen der Schließ- bzw. Faltstellung besonders einfache Ausführungsform mit einer verringerten Anzahl von Bauteilen für das Klappgestänge 7 am erfindungsgemäßen Faltverdeck 1 geschaffen werden.

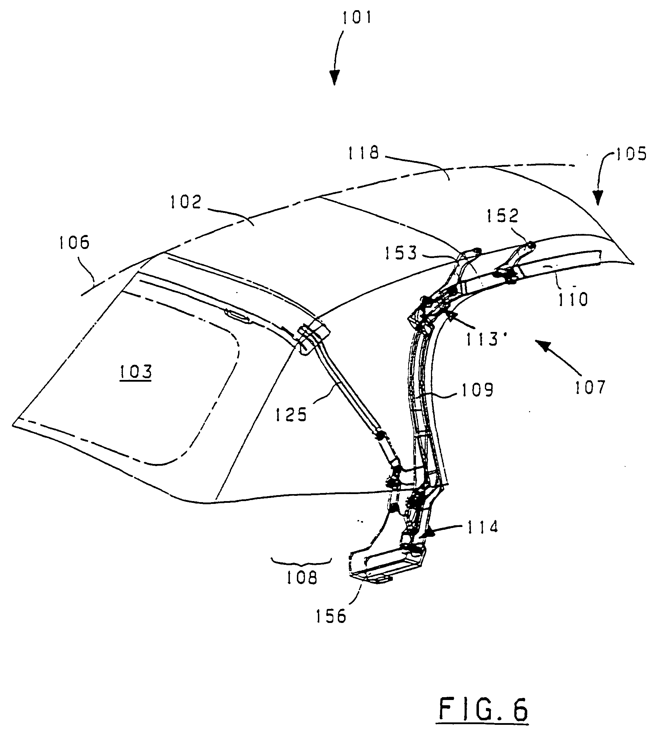

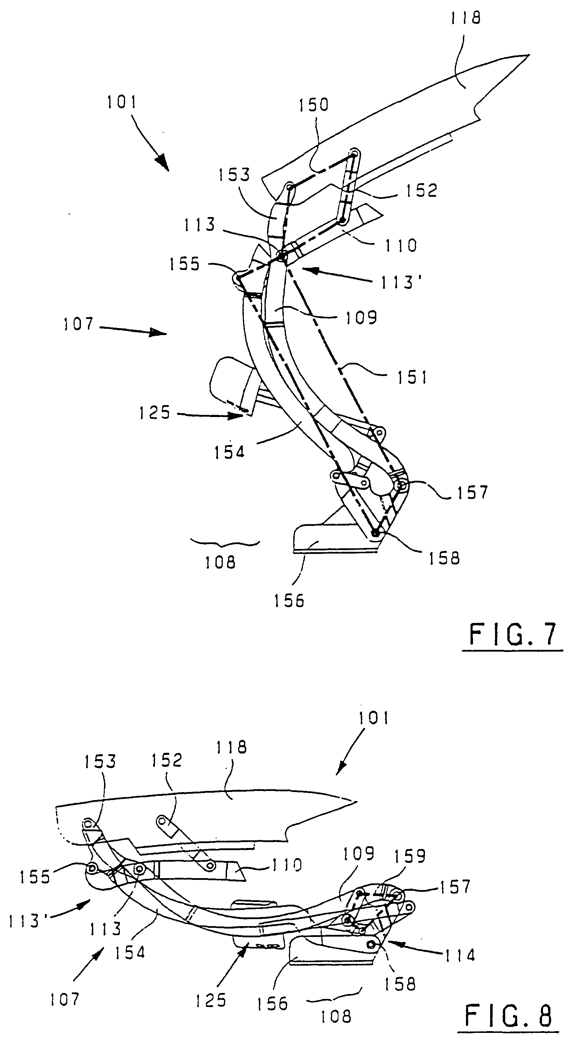

Die Fig. 6 zeigt eine derartige weitere Ausführungsform der Erfindung in einer teilweise geschnittenen Draufsicht, wobei sich ein Faltverdeck 101 mit einer flexiblen Dachhaut 102 im Bereich zwischen einer Heckscheibe 103 und einer Verdeckschale 118 erstreckt. Die flexible Dachhaut 102 bzw. die Verdeckschale 118 sind dabei zwischen zwei jeweils symmetrisch zur Längsmittelebene 106 angeordneten randseitigen Klappgestängen 107 aufgenommen und mit diesen aus der dargestellten Schließstellung (Fig. 6) in eine im wesentlichen übereinanderliegende Faltstellung im Heckbereich 108 des Fahrzeuges verbringbar (Fig. 8).

In Prinzipdarstellungen gemäß Fig. 7 und Fig. 8 ist die mit dem Klappgestänge 107 gebildete Verdeckkinematik näher veranschaulicht. Dabei ist das vorderseitig die Verdeckschale 118 tragende Klappgestänge 107 mit nur zwei Gestängeschenkeln 109,110 versehen, die im Bereich zugehöriger Gestängeschwenkachsen 113,114 schwenkbeweglich nach Art eines Kniegelenks miteinander verbunden bzw. zur Fahrzeugkarosse hin abgestützt sind.

Damit kann bei einer zur Längsmittelebene 106 parallelen Schwenkbewegung des Faltverdecks 101 dieses aus der gestreckten Schließstellung gemäß Fig. 7 in die Faltstellung gemäß Fig. 8 verbracht werden. Dabei bildet die Gestängeschenkelachse 113 für das Klappgestänge 107 eine Hauptklappachse 113', in deren Bereich der an die Verdeckschale 118 anschließende Bereich der flexiblen Dachhaut 102 eine Faltung erfährt, die in zwei Faltphasen in Fig. 7 und Fig. 8 beispielhaft für das Klappgestänge 107 dargestellt ist.

Um für diesen Falt- und Schließvorgang am Faltverdeck 101 eine Faltung ohne bereichsweise Verspannungen oder Überbelastungen an der Dachhaut 102 zu erreichen, ist für die beiden Gestängeschenkel 109,110 als Verbindung zur Verdeckschale 118 bzw. zum Heckbereich 108 des Fahrzeugs jeweils in vorteilhafter Ausbildung eine ein Viergelenk bildende Gelenkkette 150,151 vorgesehen (Fig. 7), mit denen der die Dachhaut 102 bildende Verdeckstoff sowohl straff festlegbar ist als auch mit geringen Materialbelastungen in die Faltstellung überführt werden kann.

Die unmittelbar mit der Verdeckschale verbundene Viergelenkkette 150 weist dabei einen vorderen Steuerhebel 152 und einen hinteren Steuerhebel 153 auf, der im Bereich der Hauptklappachse 113' mit dem hinteren Gestängeschenkel 109 einstückig verbunden ist. Die Viergelenkketle 150 ist dabei vorteifhaft von einem die Steuerbahn der Verdeckschale 118 bestimmenden Parallelogramm gebildet.

Die hintere Viergelenkkette 151 ist mit einem im wesentlichen parallel zum hinteren Gestängeschenkel 109 angeordneten und eine die Falthöhe (Fg. 8) vermindernde Konturkrümmung aufweisenden Zusatzschenkel 154 versehen, der einerseits den vorderen Gestängeschenkel 110 des Viergelenks 150 endseitig in einem Gelenk 155 abstützt und andererseits im Heckbereich 108 des Fahrzeuges an einem Tragglied 156 gemeinsam mit dem hinteren Gestängeschenkel 109 in jeweiligen, das Viergelenk 151 komplettierenden Gelenken 157,158 abgestützt ist. Das Viergelenk 151 weist dabei gemäß der unterbrochenen Linie in Fig. 7 die Form eines Trapezes auf, dessen Eckpunkte von der Hauptklappachse 113' und den Gelenken 155, 157 und 158 gebildet sind.

Damit ist insgesamt ein Klappgestänge 107 gebildet, dessen Einzelglieder der beiden Viergelenkketten 150,151 bei der Schwenkbewegung des Faltverdecks 101 zugleich wirksam werden und die Verdeckschale 118 sowie die hiermit bündig verspannte flexible Dachhaut 102 in einer Steuerbahn führen, die eine spannungsarme Faltbewegung vermittelt, Überbelastungen vermeidet und damit die Bewegung des Faltverdecks 101 insgesamt erleichtert.

Im Bereich des hinteren Gestängeschenkels 109 ist in zweckmäßiger Ausführungsform ein Eckspriegel 125 abgestützt, der in der Schließstellung des Faltverdecks 101 gemäß Fig. 6 die Dachhaut 102 untergreift und damit auch in diesem Bereich die insgesamt gestraffte Verdeckkontur ermöglicht. Der Eckspriegel 125 ist dabei mit dem Klappgestänge 107 derart schwenkbeweglich verbunden, daß bei der vorbeschriebenen Schwenkbewegung der Gestängeschenkel 109,110 ebenfalls eine entsprechende Ansteuerung erfolgen kann, der Faltvorgang unterstützt ist und das Klappgestänge 107 und der Eckspriegel 125 eine geringsten Raum erfordernde Faltstellung einnehmen.

Die Bewegungsphasen in Fig. 7 und Fig. 8 veranschaulichen eine bevorzugte Abstützung des Eckspriegels 125 über eine ebenfalls mit der hinteren Viergelenkkette 151 angesteuerte Viergelenkkette 159 (Fig. 8) im Bereich des Traggliedes 156, wobei das Gelenk 157 eine gemeinsame Hauptschwenkachse der Viergelenkkette 151 und 159 bildet. Damit ist für die Dachhaut 102 während des Faltvorganges (Fig. 7) eine zusätzliche Unterstützung im Bereich der Heckscheibe 103 erreicht, wobei die Verdeckspannung im wesentlichen gegen den hinteren Gestängeschenkel 109 und den Zusatzschenkel 154 über eine entsprechende Wahl des Drehpunktes abgestützt werden kann.

Das mit dem Klappgestänge 107 ausgebildete Faltverdeck 102 bildet damit insgesamt ein aufklappbares Dach, das auch bei oftmaliger Wiederholung des Falt- und Schließvorganges ohne Verschleißerscheinungen im Bereich der. flexiblen Dachhaut 102 aus der Schließstellung gemäß Fig. 7 in die Faltstellung gemäß Fig. 8 bewegbar ist, in der die Verdeckschale 118 ihre vorteilhafte Schutzabdeckstellung einnimmt.

## Patentansprüche

1. Faltverdeck für ein Cabriolet-Fahrzeug, dessen flexible Dachhaut (2;102) zwischen paarweise gegenüberliegenden Gestängeschenkeln (9,10,11,12;109,110) eines jeweils längsrandseitig angreifenden Klappgestänges (7;107) aufgenommen ist, mit dessen in einer Ebene parallel zur Längsmittelebene (6:106) des Fahrzeugs viergelenkgesteuerten Schwenkbewegung das Faltverdeck (1;101) aus einer im Frontscheibenbereich (5;105) gehaltenen Schließstellung in eine im wesentlichen übereinander liegende Faltstellung der Gestängeschenkel (9,10,11,12;109,110) im Heckbereich (8;108) des Fahrzeuges verbringbar ist, **dadurch gekennzeichnet, daß** nur der in Schließstellung zwischen den vorderen Gestängeschenkeln (12;110) gebildete Verdeckbereich als an sich bekannte, in sich steife und formstabile Verdeckschale (18;118) ausgebildet ist, die unter vollständiger Überdeckung bündig mit der zwischen den nächsten Gestängeschenkeln (11;109) gehaltenen flexiblen Dachhaut (2;102) verspannt und in der aufgeklappten Faltstellung im Heckbereich (8;108) über dem Faltverdeck (1;101) in einer Schutzabdeckstellung mit nach oben weisender Dachoberseite festlegbar ist, wobei das Klappgestänge (7; 107) eine gerade Anzahl von jeweils in Gestängeschwenkachsen (13,14,15,16;113,114) gekoppelten Gestängeschenkeln (9,10,11,12; 109, 110) aufweist.

2. Faltverdeck nach Anspruch 1, **dadurch gekennzeichnet, daß** vorzugsweise jeweils vier Gestängeschenkel (9,10,11,12) randseitig am Faltverdeck (1) angeordnet sind.

3. Faltverdeck nach Anspruch 1 oder 2, **dadurch gekennzeichnet, daß** die Verdeckschale (18;118) mit einem integrierten Sonnendach (30) ausgebildet ist.

4. Faltverdeck nach Anspruch 3, **dadurch gekennzeichnet, daß** das Sonnendach (30) in einer abgesenkten Formausnehmung (31) der Verdeckschale (18;118) am zur Frontscheibe (5) vorderen Randbereich (32) schwenkbeweglich abgestützt und am hinteren Randbereich (33) an einer Dichtkante (34) auflegbar ist.

5. Faltverdeck nach einem der Ansprüche 1 bis 4, **dadurch gekennzeichnet, daß** die Verdeckschale (18;118) als eine in der Schutzabdeckstellung das Klappgestänge (7;107) und die Dachhaut (2;102) in Faltstellung im hinteren Fahrzeugbereich (8;108) überdeckende Hüllform ausgebildet ist.

6. Faltverdeck nach einem der Ansprüche 1 bis 5, **dadurch gekennzeichnet, daß** zwischen dem hinteren Rand (19) der Verdeckschale (18;118) und einem Heckscheibenrahmen (22) längsgerichtete Spanngurte (23,24) vorgesehen sind.

7. Faltverdeck nach Anspruch 6, **dadurch gekennzeichnet, daß** die Spanngurte (23,24) aus flexiblem Material bestehen.

8. Faltverdeck nach einem der Ansprüche 1 bis 7, **dadurch gekennzeichnet, daß** zumindest zwischen den jeweils hinteren zwei Gestängeschenkeln (9,10) ein quer verspannter Spriegel (25,26) angeordnet ist.

9. Faltverdeck nach Anspruch 8, **dadurch gekennzeichnet, daß** die Spriegel (25,26) jeweils ein Verbindungsstück (28,29) zum Gestängeschenkel (9,10) aufweisen.

10. Faltverdeck nach einem der Ansprüche 1 bis 9, **dadurch gekennzeichnet, daß** die Verdeckschale (18;118) als ein zumindest bereichsweise doppellagiger Profilrahmen (35) mit einer oberen Deckhaut (36) und einer den Innenraum (37) des Fahrzeugs nach oben begrenzenden Schutzdecke (38) ausgebildet ist.

11. Faltverdeck nach Anspruch 10, **dadurch gekennzeichnet, daß** der Profilrahmen (35) eine in Schließstellung in eine Karosserieformausnehmung (21) oberhalb der Frontscheibe (5) eingreifende vordere Randwulst (20) aufweist.

12. Faltverdeck nach Anspruch 10 oder 11, **dadurch gekennzeichnet, daß** die Verdeckschale (18;118) zum Fahrzeuginnenraum (37) hin Innenpolsterungen (40) aufweist.

13. Faltverdeck nach einem der Ansprüche 10 bis 12, **dadurch gekennzeichnet, daß** der Profilrahmen (35) mit die Innenpolsterung (40) haltenden Formerweiterungen (39) versehen ist.

14. Faltverdeck nach einem oder mehreren der Ansprüche 1 bis 13, **dadurch gekennzeichnet, daß** das vorderseitig die Verdeckschale (118) tragende Klappgestänge (107) zwei Gestängeschenkel (109,110) aufweist, die als Verbindung zur Verdeckschale (118) bzw. zum Heckbereich (108) des Fahrzeugs jeweils mit einer ein Viergelenk (150,151) bildenden Gelenkkette versehen sind, derart, daß die Einzelglieder (152,153;109,154) der Viergelenkketten (150,151) bei der Schwenkbewegung des Faltverdecks (101) zugleich der mit der Verdeckschale (118) verspannten flexiblen Dachhaut (102) eine spannungsarme Faltbewegung vermitteln.

15. Faltverdeck nach Anspruch 14, **dadurch gekennzeichnet, daß** die beiden Viergelenke (150,151) im Bereich der, die zwei Gestängeschenkel (109,110) verbindenden Gestängeschenkelachsel (113) eine gemeinsame Hauptklappachse (113') bilden.

16. Faltverdeck nach Anspruch 14 oder 15, **dadurch gekennzeichnet, daß** die unmittelbar mit der Verdeckschale (118) verbundene Viergelenkkette (150) im Bereich des vorderen Gestängeschenkels (110) einen vorderen Steuerhebel (152) und einen hinteren Steuerhebel (153) aufweist, der im Bereich der Hauptklappachse (113') einstückig mit dem hinteren Gestängeschenkel (109) verbunden ist.

17. Faltverdeck nach einem der Ansprüche 14 bis 16, **dadurch gekennzeichnet, daß** die hintere Viergelenkkette (151) mit einem Zusatzschenkel (154) versehen ist, der einerseits den vorderen Gestängeschenkel (110) in einem Gelenk (155) abstütz und andererseits im Heckbereich (108) des Fahrzeugs an einem Tragglied (156) gemeinsam mit dem hinteren Gestängeschenkel (109) in jeweiligen Gelenken (157,158) abgestützt ist.

18. Faltverdeck nach einem der Ansprüche 14 bis 17, **dadurch gekennzeichnet, daß** im Bereich des hinteren Gestängeschenkels (109) ein die Dachhaut (102) untergreifender Eckspriegel (125) schwenkbeweglich abgestützt ist.

19. Faltverdeck nach einem der Ansprüche 14 bis 18, **dadurch gekennzeichnet, daß** der Eckspriegel (125) des Faltverdecks (101) über eine ebenfalls mit der hinteren Viergelenkkette (151) bewegbare Viergelenkkette (159) am Fahrzeug im Bereich des Traggliedes (156) abgestützt ist.

## Claims

1. A collapsible hood for a cabriolet vehicle, of which the flexible roof skin (2; 102) is accommodated between two pairwisely oppositely disposed linkage arms (9, 10, 11, 12; 109, 110) of a folding linkage (7; 107) which engages the longitudinal sides and with which in a plane parallel with the longitudinal central plane (6; 106) through the vehicle the collapsible hood (1; 101) can be moved out of a closed position in which it is held in the region of the front windscreen (5; 105) and into a substantially superposed folded position ofthe linkage arms (9, 10, 11, 12; 109, 110) in the rear area (8; 108) of the vehicle, **characterised in that** only the part of the hood formed between the front linkage arms (12, 110) in the closed position is constructed as a *per se* known in itself rigid and form-stable hood shell (18; 118) which is connected flush with the flexible roof skin (2; 102) held between the nearest linkage arms (11; 109), while being completely covered and which can be secured in a masked position, with the upper surface of the roof facing upwards, the folding linkage (7; 107) comprising an even number of linkage arms (9, 10, 11, 12; 109, 110) which are in each case coupled at linkage pivot axes (13, 14, 15, 16; 113, 114).

2. A collapsible hood according to claim 1, **characterised in that** preferably in each case four linkage arms (9, 10, 1, 12) are disposed at the edges of the collapsible hood (1).

3. A collapsible hood according to claim 1 or 2, **characterised in that** the hood shell (18; 118) is constructed with an integrated sun roof (30).

4. A collapsible hood according to claim 3, **characterised in that** the sun roof (30) is supported to be pivotally movable in the marginal portion (32) which is at the front in relation to the windscreen (5) in a lowered and shaped recess (31) of the hood shell (18; 118) and can be set down on a sealing edge (34) at the rear marginal portion (33).

5. A collapsible hood according to one of claims 1 to 4, **characterised in that** the hood shell (18; 118) is constructed as an envelope shape which, in the protective and covered position, covers the folding linkage (7; 107) and covers the roof skin (2; 102) in the folded position and in the rear part (8; 108) of the vehicle.

6. A collapsible hood according to one of claims 1 to 5, **characterised in that** longitudinally orientated tensioning straps (23, 23) are provided between the rear edge (19) of the hood shell (18; 118) and a rear windscreen frame (22).

7. A collapsible hood according to claim 6, **characterised in that** the tensioning straps (23, 24) consist of a flexible material.

8. A collapsible hood according to one of claims 1 to 7, **characterised in that** a transversely tensioned hoop (25, 26) is disposed at least between whichever are the two rear linkage arms (9, 10).

9. A collapsible hood according to claim 8, **characterised in that** the hoops (25, 26) in each case comprise a piece (28, 29) for connecting them to the linkage arms (9, 10).

10. A collapsible hood according to one of claims 1 to 9, **characterised in that** the hood shell (18; 118) is constructed as a profiled frame (35) of which at least parts are double-layered, with an upper covering skin (36) and a protective covering (38) which defines the top of the interior (37) of the vehicle.

11. A collapsible hood according to claim 10, **characterised in that** the profiled frame 35) has a front marginal bead (20) which, in the closed position, engages a shaped recess (21) in the bodywork above the front windscreen (5).

12. A collapsible hood according to claim 10 or 11, **characterised in that** the hood shell (18; 118) comprises internal padding members (40) which are disposed towards the interior (37) of the vehicle.

13. A collapsible hood according to one of claims 10 to 12, **characterised in that** the profiled frame (35) is provided with shaped widened parts (9) which support the internal padding (40).

14. A collapsible hood according to one or more of claims 1 to 13, **characterised in that** the folding linkage (107) which supports the hood shell (118) at the front comprises two linkage arms (109, 110) which, as a connection with the hood shell (118) or the rear part (108) of the vehicle, are in each case provided with a link chain which forms a four-bar linkage (150, 151) so that, upon the pivoting movement of the collapsible hood (110), the individual links (152, 153; 109, 154) of the four-link chains (150, 151) impart a low-tension folding movement simultaneously to the flexible roof skin (102) adjacent the hood shell (118).

15. A collapsible hood according to claim 14, **characterised in that** the two four-bar linkages (150, 151) form a common main hinging axis (113') in the region of the linkage arm axis (113) which connects the two linkage arms (109, 110).

16. A collapsible hood according to claim 14 or 15, **characterised in that** the four-bar linkage chain (150) which is connected directly to the hood shell (118) has in the region of the forward linkage arm (110) a front control lever (152) and a rear control lever (153) which in the region of the main hinging axis (133') is integrally connected to the rear linkage arm (109).

17. A collapsible hood according to one of claims 14 to 16, **characterised in that** the rear four-bar linkage chain (151) is provided with an additional arm (154) which on the one hand braces the front linkage arm (110) in a joint (155) and on the other, in the rear part 108) of the vehicle, is supported on a supporting member (156) jointly with the rear linkage arm (109) and in respective joints (157, 158).

18. A collapsible hood according to one of claims 14 to 17, **characterised in that** in the region of the rear linkage arm (109) a corner hoop (125) is supported for pivoting movement and engages under the roof skin (102).

19. A collapsible hood according to one of claims 14 to 18, **characterised in that** the corner hoop (125) of the collapsible hood (101) is in the region of the supporting member (156) braced on the vehicle via a four-bar linkage chain (159) which is likewise adapted for movement with the rear four-bark linkage chain (151).

## Revendications

1. Capote pliante pour une voiture du type cabriolet, dont la couverture flexible de toit (2 ; 102) est reçue entre des pièces latérales de tringlerie opposées par couple (9, 10, 11, 12 ; 19, 110) d'une tringlerie de rabattement (7, 107) agissant respectivement du côté du bord longitudinal, avec laquelle dans un mouvement de basculement dans un plan parallèle au plan médian longitudinal (6 ; 106) du véhicule, la capote pliante (1 ; 101) peut passer d'une position de fermeture maintenue dans la zone du pare brise (5 ; 105) dans une position repliée de pièces de tringlerie (9, 10, 11, 12 ; 109, 110) se situant essentiellement les unes au-dessus des autres dans la zone arrière (8, 108) du véhicule,
**caractérisé en ce que**
seulement la zone de capote formée en position de fermeture entre les pièces avant de tringlerie (12 ; 110) est réalisée d'une manière connue en soi, en enveloppe de capote (18, 118) raide et de forme stable, qui est reliée à la couverture de toit flexible (2 ; 102) à fleur avec recouvrement complet et maintenue tendue entre les pièces de tringlerie (11, 109) les plus proches et peut être fixée en position repliée rabattue dans la zone arrière (8 ; 108) au-dessus de la capote pliante (1 ; 101) dans une position de recouvrement avec le côté du toit tourné vers le haut, la tringlerie de rabattement (7 ; 107) comportant un nombre pair de pièces (9, 10, 11, 12 ; 109, 110) accouplées sur des axes de pivotement de la tringlerie (13, 14, 15, 16 ; 113, 114).

2. Capote pliante selon la revendication 1,
**caractérisée en ce que**
de préférence respectivement quatre pièces de tringlerie (9, 10, 11, 12) sont placées du côté bord contre la capote pliante (1).

3. Capote pliante selon la revendication 1 ou 2,
**caractérisée en ce que**
l'enveloppe de capote (18, 118) est réalisée avec un toit ouvrant intégré (30).

4. Capote pliante selon la revendication 3,
**caractérisée en ce que**
le toit ouvrant (30) est appuyé mobile en pivotement dans un évidement de forme en creux (31) de l'enveloppe de capote (18, 118) situé sur la zone de bord (32) de devant vers le pare-brise (5) et peut être raccroché sur la zone de bord arrière (33) à un bord d'étanchéité (34).

5. Capote pliante selon l'une quelconque des revendications 1 à 4,
**caractérisée en ce que**
l'enveloppe de capote (18 ; 118) est réalisée en une forme d'enveloppe recouvrant dans la position de protection la tringlerie de rabattement (7 ; 107) et la couverture de toit (2 ; 102) en position repliée dans la zone arrière du véhicule (8 ; 108).

6. Capote pliante selon une des revendications 1 à 5,
**caractérisée en ce que**
entre le bord arrière (19) de la capote pliante (18 ; 118) et un cadre de lunette arrière (22) sont prévues des sangles de tension (23, 24) dirigées longitudinalement.

7. Capote pliante selon la revendication 6,
**caractérisée en ce que**
les sangles de tension (23, 24) sont composées de matière flexible.

8. Capote pliante selon l'une quelconque des revendications 1 à 7,
**caractérisée en ce que**
les sangles de tension (23, 24) sont composées de matière flexible.

9. Capote pliante selon la revendication 8,
**caractérisée en ce que**
les arceaux (25, 26) comportent chacun une pièce de liaison (28, 29) à la pièce de liaison (28, 29) à la pièce de tringlerie (9, 10).

10. Capote pliante selon l'une quelconque des revendications 1 à 9,
**caractérisée en ce que**
l'enveloppe de capote (18 ; 118) est réalisée comme un cadre profilé (35) à double couche au moins par zone avec une couverture de toit supérieure (36) et une couverture de protection (38) délimitant vers le haut l'espace intérieur (37) du véhicule.

11. Capote pliante selon la revendication 10,
**caractérisée en ce que**
le cadre profilé (35) comporte en position de fermeture, un bourrelet de bord (20) avant s'insérant dans un évidement de forme de la carrosserie (21) au-dessus du pare brise (5).

12. Capote pliante selon les revendications 10 ou 11,
**caractérisée en ce que**
l'enveloppe de capote (18 ; 118) comporte du capitonnage interne (40) en direction de l'intérieur du véhicule (37).

13. Capote pliante selon l'une quelconque des revendications 10 à 12,
**caractérisée en ce que**
le cadre profilé (35) est muni d'élargissements de forme (39) contenant le capitonnage interne (40).

14. Capote pliante selon une ou plusieurs des revendications 1 à 13,
**caractérisée en ce que**
la tringlerie de rabattement (107) portant du capoté avant l'enveloppe de capote (118) comporte deux pièces (109, 110), qui sont munies en tant que liaison à l'enveloppe de capote (118) ou à la zone arrière (108) du véhicule respectivement, d'une chaîne cinématique à quatre joints enforme de quadrilatère articulé (150, 151), de manière que les éléments individuels (152, 153 ; 109, 154) des chaînes cinématiques à quatre joints articulés (150, 151) provoquent, lors du mouvement de rabattement de la capote pliante (101), un mouvement de pliage presque sans tension en même temps que la couverture de toit (102) flexible se raccordant à l'enveloppe de capote (118).

15. Capote pliante selon la revendication 14,
**caractérisée en ce que**
les deux quadrilatères articulés (150, 151) forment dans la zone de l'axe (113) des pièces de tringlerie reliant les deux pièces (109, 110), un axe principal de rabattement commun (113').

16. Capote pliante selon les revendications 14 ou 16,
**caractérisée en ce que**
la chaîne cinématique à joint articulé (150) reliée directement à l'enveloppe de capote (118) comporte dans la zone de la pièce de tringlerie avant (110), un levier de commande avant (152) et un levier de commande arrière (153), qui est relié dans la zone de l'axe de rabattement principal (113') en une pièce avec la pièce de tringlerie arrière (109).

17. Capote pliante selon l'une quelconque des revendications 14 à 16,
**caractérisée en ce que**
la chaîne cinématique à joints articulés, arrière (151) est équipée d'une pièce supplémentaire (154), qui supporte d'une part la pièce de tringlerie avant (110) dans une articulation (155) et qui d'autre part dans la zone arrière du véhicule (108) est supportée par un élément porteur (156) en commun avec la pièce de tringlerie arrière (109) dans des articulations respectives (157, 158).

18. Capote pliante selon l'une quelconque des revendications 14 à 17,
**caractérisée en ce que**
la zone de la pièce de tringlerie arrière (109) supporte avec mouvement de pivotement possible un arceau d'angle (125) passant sous la couverture de toit (102).

19. Capote pliante selon une des revendications 14 à 19,
**caractérisée en ce que**
l'arceau de coin (125) de la capote pliante (101) est supporté sur le véhicule, dans la zone de l'élément porteur (156), par une chaîne cinématique à quatre joints articulés (159) mobile également avec la chaîne cinématique arrière à quatre joints articulés (151).
